# EUROPÄISCHE PATENTANMELDUNG

(11) **EP 0 971 250 A2**
(43) Veröffentlichungstag der Anmeldung: **12.01.2000**
(21) Anmeldenummer: 99111572.6
(22) Anmeldetag: 15.06.1999
(51) Int. Cl.: G02B 6/38, G02B 6/42

(54) **Anschlusselement für ein Lichtwellenleiterkabel sowie Verfahren zum Anschliessen eines Lichtwellenleiterkabels**

(30) Priorität: 06.07.1998 DE 19830148
(71) Anmelder: Harting KGaA, 32325 Espelkamp (DE)
(72) Erfinder: Harting, Dietmar, Dipl.-Kfm., 32339 Espelkamp (DE); Bussmann, Rainer, Dipl.-Ing., 49152 Bad Essen (DE); Kleedörfer, Claus, Dipl.-Ing., 32369 Rahden (DE)

(57) **Zusammenfassung**

Es wird ein Anschlußelement für ein Lichtwellenleiterkabel vorgeschlagen, das mindestens eine Lichtwellenleiterader enthält. Das Anschlußelement besteht aus einem einem zylindrischen Grundkörper (10), einem Halteteil (30), das in dem Grundkörper (10) angeordnet ist und mindestens eine Haltebohrung (32) für die Lichtwellenleiterader (7, 9) sowie eine Kompressionsfläche (38) im Bereich eines Endes der Haltebohrung (32) aufweist, einem Druckteil (50), das in dem Grundkörper (10) angeordnet ist und eine Durchgangsbohrung (52), die zur Haltebohrung (32) im Halteteil (30) konzentrisch ist, und eine Druckfläche (58) aufweist, die mit der Kompressionsfläche (38) des Halteteils (30) zusammenwirkt, und mit einem Verschraubungsteil (14), das auf den Grundkörper (10) aufgeschraubt ist und das Druckteil (50) gegen das Halteteil (30) pressen kann, wodurch die Haltebohrung (32) aufgrund des von der Druckfläche (58) auf die Kompressionsfläche (38) ausgeübten Drucks wenigstens im Bereich der Kompressionsfläche (38) verengt wird. Es wird ferner ein Verfahren zum Anschließen eines Lichtwellenleiterkabels an einem solchen Anschlußelement beschrieben.

## Beschreibung

Die Erfindung betrifft ein Anschlußelement für ein Lichtwellenleiterkabel, das mindestens eine Lichtwellenleiterader enthält. Ein solches Anschlußelement kann weiterhin entweder zusätzliche Lichtwellenleiteradern oder auch elektrische Adern enthalten. Die Erfindung betrifft ferner ein Verfahren zum Anschließen eines Lichtwellenleiterkabels an ein solches Anschlußelement.

Die Ader eines solchen Lichtwellenleiterkabels kann entweder optisch mit einer Ader eines weiteren Lichtwellenleiterkabels gekoppelt werden, das an das erste Lichtwellenleiterkabel angeschlossen werden soll, oder mit einem opto-elektronischen Wandler gekoppelt werden, so daß entweder eine Weiterleitung von optischen Signalen, die im Lichtwellenleiterkabel geleitet werden, in der Form von elektrischen Signalen möglich ist, die im Wandler erzeugt werden, oder daß elektrische Signale, die dem Wandler zugeführt werden, dann als optische Signale im Lichtwellenleiterkabel weitergeleitet werden. Falls das Lichtwellenleiterkabel neben der Lichtwellenleiterader eine elektrische Ader enthält, muß eine Steckverbindung für diese Ader erzielt werden. Zusätzlich zu der optischen bzw. elektrischen Kopplung des Lichtwellenleiterkabels entweder mit einem weiteren Lichtwellenleiterkabel oder einem opto- elektronischen Wandler dient das Anschlußelement auch dazu, das Lichtwellenleiterkabel mechanisch anzuschließen. Ein derartiger Anschluß soll mechanisch stabil sein, insbesondere für rauhe Umgebungsbedingungen geeignet sein.

Aus dem Stand der Technik ist derzeit bekannt, an dem anzuschließenden Ende der Lichtwellenleiterader einen handelsüblichen Steckverbinder anzubringen, der dann in eine komplementäre Steckbuchse eingesteckt wird. In dieser Steckbuchse kann dann entweder der opto-elektronische Wandler angeordnet sein, mit dem die Lichtwellenleiterader gekoppelt werden soll, oder eine weitere Lichtwellenleiterader eingesteckt sein, in die die Signale der ersten Lichtwellenleiterader eingespeist werden sollen.

Nachteilig bei dieser Lösung ist jedoch, daß der Zeit- und Materialaufwand zum Herstellen des Anschlusses vergleichsweise groß ist. Der Erfindung liegt daher sie Aufgabe zugrunde, ein Anschlußelement für ein Lichtwellenleiterkabel zu schaffen, mittels dem die Lichtwellenleiterader des Kabels kostengünstig mit geringem Aufwand entweder an einen opto-elektronischen Wandler oder an ein weiteres Lichtwellenleiterkabel angeschlossen werden kann.

Diese Aufgabe wird gelöst mit einem Anschlußelement für ein Lichtwellenleiterkabel, das mindestens eine Lichtwellenleiterader enthält, mit einem zylindrischen Grundkörper, einem Halteteil, das in dem Grundkörper angeordnet ist und mindestens eine Haltebohrung für die Lichtwellenleiterader sowie eine Kompressionsfläche im Bereich eines Endes der Haltebohrung aufweist, einem Druckteil, das in dem Grundkörper angeordnet ist und eine Durchgangsbohrung, die zur Haltebohrung im Halteteil konzentrisch ist, und eine Druckfläche aufweist, die mit der Kompressionsfläche des Halteteils zusammenwirkt, und mit einem Verschraubungsteil, das auf den Grundkörper aufgeschraubt ist und das Druckteil gegen das Halteteil pressen kann, wodurch die Haltebohrung aufgrund des von der Druckfläche auf die Kompressionsfläche ausgeübten Drucks wenigstens im Bereich der Kompressionsfläche verengt wird. Zum Anschließen der Lichtwellenleiterader des Lichtwellenleiterkabels ist es bei diesem Anschlußelement ausreichend, die Lichtwellenleiterader in die Haltebohrung des Halteteils einzusetzen und dann durch Aufschrauben des Verschraubungsteils auf den Grundkörper einen solchen Druck mittels des Druckteils auf das Halteteil auszuüben, daß die Lichtwellenleiterader sicher in der Haltebohrung festgelegt ist. Auf diese Weise ist zum einen die Lichtwellenleiterader genau positioniert, und zum anderen wird eine Zugentlastung sichergestellt, welche die erforderliche mechanische Befestigung der Lichtwellenleiterader ergibt. Zum Anschließen des Lichwellenleiterkabels ist somit kein spezielles Werkzeug erforderlich, und auch der Zeitaufwand zum Einsetzen und befestigen des Lichtwellenleiterkabels im Anschlußelement ist sehr gering.

Je nach Art des anzuschließenden Lichtwellenleiterkabels können das Halteteil und das Druckteil zwei oder mehr Bohrungen aufweisen, die symmetrisch zur Längsachse des Grundkörpers angeordnet sind und sich parallel zueinander und parallel zu dieser erstrecken, wobei das Verschraubungsteil mit einer konzentrisch mit der Längsachse des Grundkörpers angeordneten Eintrittsöffnung für das Lichtwellenleiterkabel versehen ist. Ein solches Anschlußelement ermöglicht es, Lichtwellenleiterkabel mit einer Vielzahl von einzelnen Lichtwellenleiteradern anzuschließen.

Gemäß einer Ausführungsform der Erfindung kann vorgesehen sein, daß der Grundkörper eine Wand aufweist, die sich senkrecht zur Längsachse des Grundkörpers erstreckt und mit mindestens einem elektronischen Bauteil, beispielsweise einem opto-elektronischen Wandler, versehen ist, das mit der in der Haltebohrung aufgenommenen Lichtwellenleiterader optisch koppelbar ist. Ein solches Anschlußelement kombiniert die bisher im Stand der Technik separat bereitgestellten Funktionen des mechanischen Anschließens des Lichtwellenleiterkabels, des Koppelns der Lichtwellenleiterader mit einem opto-elektronischen Bauteil und des Umwandelns von optischen Signalen in elektrische Signale und umgekehrt.

Gemäß einer anderen Ausführungsform der Erfindung ist vorgesehen, daß das Anschlußelement auf der von dem Verschraubungsteil abgewandten Seite des Grundkörpers eine Baugruppe zum Aufnehmen und Halten eines weiteren Lichtwellenleiterkabels enthält, dessen Lichtwellenleiterader mit der in der Haltebohrung aufgenommenen Lichtwellenleiterader gekoppelt werden kann. Ein solches Anschlußelement ermöglicht es auf besonders einfache Weise, zwei Lichtwellenleiterkabel miteinander zu koppeln, ohne daß hierfür eigens Stecker an den Lichtwellenleiteradern angebracht werden müssen und eine Steckbuchse bereitgestellt werden muß, in welche die Lichtwellenleiteradern dann eingesteckt werden.

Vorzugsweise ist vorgesehen, daß das Druckteil mit mindestens einer Nase versehen ist, die in einem an dem Halteteil gebildeten Einschnitt eingreift, so daß das Druckteil gegenüber dem Halteteil drehfest ist. Dies gewährleistet, daß beim Aufschrauben des Verschraubungsteils auf den Grundkörper keine Scherkräfte auf die durch das Druckteil und das Halteteil verlaufende Lichtwellenleiterader ausgeübt werden.

Vorzugsweise ist weiterhin vorgesehen, daß das Halteteil mittels einer Nut und einem in diese eingreifenden Vorsprung in einer eindeutigen Winkelposition relativ zu dem Grundkörper positioniert ist. Dies gewährleistet dann, wenn ein Lichtwellenleiterkabel mit mehreren Adern verwendet wird, daß eine Codierung erhalten wird, so daß die einzelnen Adern des Lichtwellenleiterkabels zuverlässig entweder mit den zugehörigen opto-elektronischen Bauteilen oder den zugehörigen Adern eines zweiten Lichtwellenleiterkabels gekoppelt werden.

Vorzugsweise ist weiterhin vorgesehen, daß zwischen dem Verschraubungsteil und dem Druckteil eine Dichtung angeordnet ist, die zwischen dem Lichtwellenleiterkabel und dem Grundkörper abdichtet und eine Kraft von dem Verschraubungsteil auf das Druckteil übertragen kann. Mittels einer solchen Dichtung kann eine zuverlässige mechanische Abdichtung des Inneren des Grundkörpers erzielt werden, so daß eine Schutzklasse IP 67 erreicht wird.

Vorzugsweise ist vorgesehen, daß die Kompressionsfläche an einem kegelförmigen Ansatz am Halteteil und die Druckfläche am Boden einer Vertiefung im Druckteil ausgebildet ist. Diese Gestaltung ermöglicht es in besonders einfacher Weise, eine von dem Verschraubungsteil auf das Druckteil und das Halteteil ausgeübte, in axialer Richtung wirkende Druckkraft in eine Verengung des Querschnitts der Haltebohrung umzusetzen. Gleichzeitig sorgt diese Gestaltung für eine automatische Zentrierung des Druckteils relativ zum Halteteil.

Es kann weiterhin vorgesehen sein, daß der Grundkörper auf seiner Außenseite mit einem Flansch und einem Gewinde versehen ist, auf das eine Befestigungsmutter aufgeschraubt werden kann. Bei dieser Gestaltung kann das Anschlußelement beispielsweise im Gehäuse eines elektronischen Geräts angeordnet sein, das in einfacher und zuverlässiger Weise mit einem Lichtwellenleiterkabel verbunden werden soll.

Die oben genannte Aufgabe wird ferner gelöst durch ein Verfahren zum Verbinden eines Lichtwellenleiterkabels mit einem Anschlußelement, wobei das Anschlußelement einen zylindrischen Grundkörper, ein Halteteil, das in dem Grundkörper angeordnet ist und mindestens eine Haltebohrung für die Lichtwellenleiterader sowie eine Kompressionsfläche im Bereich eines Endes der Haltebohrung aufweist, und ein Verschraubungsteil enthält, das auf den Grundkörper aufgeschraubt werden kann, dadurch gekennzeichnet, daß auf das Lichtwellenleiterkabel ein Druckteil aufgeschoben wird, daß eine Lichtwellenleiterader des Lichtwellenleiterkabels in das Halteteil eingeschoben wird, daß das Druckteil an dem Halteteil fixiert wird, wodurch die Lichtwellenleiterader in dem Halteteil fixiert wird, daß die von den Druckteil und dem Halteteil gebildete Baugruppe in den Grundkörper eingesetzt wird und daß schließlich durch Aufschrauben des Verschraubungsteils auf den Grundkörper das Druckteil gegen das Halteteil und dieses wiederum in den Grundkörper gepreßt wird, wodurch das Lichtwellenleiterkabel und die Lichtwellenleiterader fest mit dem Anschlußelement verbunden wird. Mit diesem Verfahren kann die anzuschließende Lichtwellenleiterader in dem Druckteil und dem Halteteil präzise justiert werden, bevor das Anschlußelement vollständig montiert wird. Die durch das Halteteil und das Druckteil erzielte Fixierung des Lichtwellenleiterader ermöglicht es nämlich zum einen, die Lichtwellenleiterader relativ zum Halteteil zu verschieben, um die optimale Justierung zu erhalten, während zum anderen die Fixierung so fest ist, daß ein unerwünschtes Verrutschen der Lichtwellenleiterader in dem Halteteil während des endgültigen Montierens des Anschlußelementes verhindert ist.

Vorteilhafte Ausgestaltungen der Erfindung ergeben sich aus den Unteransprüchen.

Die Erfindung wird nachfolgend unter Bezugnahme auf zwei bevorzugte Ausführungsformen beschrieben, die in den beigefügten Zeichnungen dargestellt sind. In diesen zeigen:
- - Figur 1: einen Längsschnitt durch ein erfindungsgemäßes Anschlußelement gemäß einer ersten Ausführungsform;
- - Figur 2: in einer perspektivischen Explosionsansicht die Einzelteile des Anschlußelements von Figur 1;
- - Figur 3: in einer perspektivischen Ansicht das Anschlußelement von Figur 2 in einem teilmontierten Zustand;
- - Figur 4: in einer perspektivischen Ansicht das Anschlußelement von Figur 2 in einem vollständig montierten Zustand; und
- - Figur 5: in einer perspektivischen Ansicht ein erfindungsgemäßes Anschlußelement gemäß einer zweiten Ausführungsform.

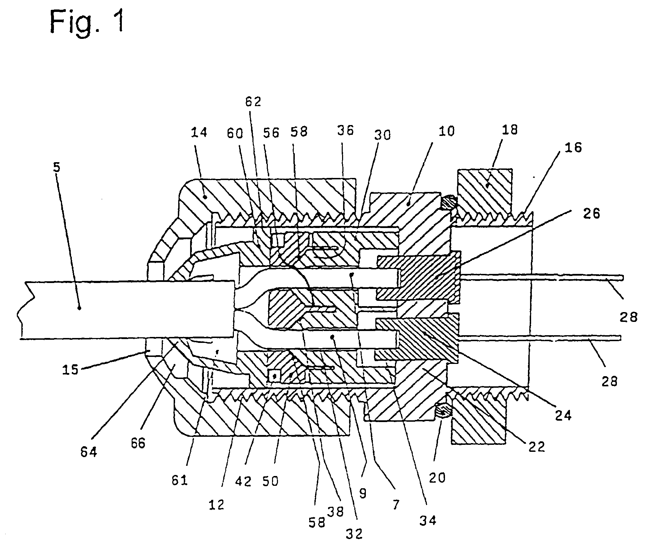

In den Figuren 1 bis 4 ist ein erfindungsgemäßes Anschlußelement gemäß einer ersten Ausführungsform gezeigt. Das Anschlußelement dient bei der hier gezeigten Ausführungsform dazu, ein Lichtwellenleiterkabel 5 anzuschließen, das zwei Lichtwellenleiteradern 7, 9 aufweist. Es ist jedoch grundsätzlich möglich, Lichtwellenleiterkabel mit mehr als zwei Lichtwellenleiteradern anzuschließen. Für diesen Fall muß lediglich der Aufbau des nachfolgend beschriebenen Anschlußelementes entsprechend angepaßt werden. Es ist auch möglich, Lichtwellenleiterkabel anzuschließen, die zusätzlich zu den Lichtwellenleiteradern noch elektrische Adern enthalten. Für diesen Fall muß im Anschlußelement eine an sich bekannte Verbindung für die elektrische Ader ausgebildet werden.

Das Anschlußelement enthält einen allgemein zylindrischen Grundkörper 10, der auf der Außenseite an einem Ende mit einem Gewinde 12 für ein Verschraubungsteil versehen ist, das hier als Überwurfmutter 14 ausgebildet ist, und am anderen Ende mit einem Gewinde 16 versehen ist, auf das eine Befestigungsmutter 18 aufgeschraubt ist. Der Grundkörper kann mittels der Befestigungsmutter 18 und einem O-Ring 20, der sich an einem Absatz eines am Grundkörper 10 ausgebildeten Befestigungsflansches abstützt, in dichter Weise z.B. in einer Öffnung eines Gehäuses eines elektrischen Geräts befestigt werden.

Der Grundkörper 10 ist in seinem Inneren in einem Bereich, der zwischen den beiden Gewinden 12, 16 liegt, mit einer Wand 22 versehen, die sich etwa senkrecht zur Längsachse des Grundkörpers 10 erstreckt. In der Wand 22 sind zwei opto- elektronische Bauteile 24, 26 aufgenommen. Diese Bauteile ermöglichen es, elektrische Signale in optische Signale umzusetzen, oder umgekehrt. Aus dem bezüglich den Figuren rechten Ende des Grundkörpers ragen elektrische Anschlußstifte 28 der opto-elektronischen Wandler 24, 26 heraus.

Im Inneren des Grundkörpers 10 ist auf der Seite des Gewindes 12 ein Haltering 30 angeordnet, der mit Haltebohrungen 32 versehen ist. Da hier zwei Lichtwellenleiteradern 7, 9 angeschlossen werden sollen, weist das Halteteil 30 auch zwei Haltebohrungen 32 auf Die Haltebohrungen 32 erstrecken sich parallel zueinander und parallel zur Längsachse des Grundkörpers durch das Halteteil 32 hindurch, und sie sind symmetrisch zur Längsachse des Grundkörpers angeordnet. Ferner sind die Haltebohrungen 32 als Stufenbohrungen ausgebildet, wobei der der Wand 22 zugewandte Abschnitt 34 der Stufenbohrungen erweitert und mit einem solchen Durchmesser ausgebildet ist, daß in diesen Abschnitt der opto-elektronische Wandler 24 bzw. 26 hineinragt.

Um die von der Wand 22 abgewandten Enden der Haltebohrung 32 herum ist das Halteteil 30 mit Ansätzen 36 versehen, die jeweils an ihrem äußeren Ende als kegelstumpfförmige Kompressionsfläche 38 enden.

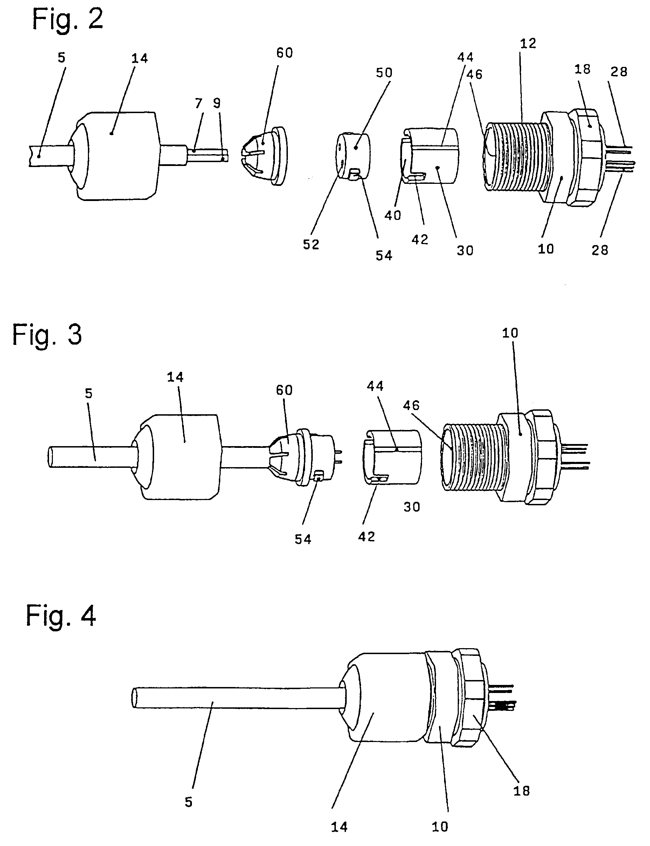

Die Ansätze 36 sind umgeben von einer zylindrischen Wand 40, die mit zwei einander diametral gegenüberliegenden Einschnitten 42 versehen ist. Auf der Außenfläche des Halteteils 30 ist ferner eine Nut 44 vorgesehen, die mit einem auf der Innenwand des Grundkörpers 10 im Bereich des Gewindes 12 ausgebildeten Vorsprung 46 (angedeutet in Figur 3) derart zusammenwirkt, daß ein Einsetzen des Halteteils 30 in den Grundkörper 10 nur in einer einzigen Winkelstellung relativ zum Grundkörper möglich ist.

In dem von der zylindrischen Wand 40 des Halteteils 30 umschlossenen Raum ist ein zylindrisches Druckteil 50 angeordnet. Das Druckteil weist zwei Durchgangsbohrungen 52 auf, die zu den Haltebohrungen 32 im Halteteil 30 konzentrisch sind. Auf seiner Außenfläche ist das Druckteil 50 mit zwei einander diametral gegenüberliegenden Nasen 54 versehen, die in die Einschnitte 42 am Halteteil 30 eingreifen, so daß das Druckteil 50 relativ zum Halteteil 30 drehfest gehalten ist.

Auf seiner den Kompressionsflächen 38 des Halteteils 30 zugewandten Seite ist das Druckteil 50 mit zwei Vertiefungen 56 ausgebildet, die jeweils konzentrisch mit der entsprechenden Durchgangsbohrung 52 angeordnet sind. Der Boden jeder Vertiefung 56 ist derart kegelförmig ausgebildet, daß er eine Druckfläche 58 bildet, die mit der entsprechenden Kompressionsfläche des Halteteils zusammenwirken kann.

Auf der von der Wand 22 abgewandten Seite des Druckteils 50 ist eine Dichtung 60 zusammen mit einem Gummiring 61 (siehe Figur 1) angeordnet, die mittels ihres Außenumfangsrandes 62 gegen die Wand des Grundkörpers 10 und mittels ihres Innenumfangsrandes 64 gegen das Lichtwellenleiterkabel 5 abdichtet.

Auf das Gewinde 12 des Grundkörpers 10 ist schließlich die Überwurfmutter 14 aufgeschraubt, die an der Dichtung 60 mittels einer Anlagefläche 66 angreift.

Das Anschlußelement wird in der folgenden Weise montiert: Zuerst wird die Überwurfmutter 14 auf das Lichtwellenleiterkabel 5 aufgeschoben. Dann wird die Dichtung 60 auf das Lichtwellenleiterkabel aufgeschoben. Anschließend werden die beiden Adern 7 und 9 des Lichtwellenleiterkabels durch die Durchgangsbohrungen 52 des Druckteils 50 geführt, bis sie wieder aus dem Druckteil 50 heraustreten (siehe Figur 3). Nun wird das Halteteil 30 auf das Druckteil aufgesetzt, wobei die Lichtwellenleiteradern 7, 9 in die Haltebohrungen 32 eingefädelt werden. Um die Lichtwellenleiteradern präzise in dem Halteteil zu justieren, kann diese beispielsweise mit seiner später der Wand 22 des Grundkörpers zugewandten Seite auf einen ebenen Gegenstand oder eine ebene Unterlage gelegt werden. Anschließend werden die Lichtwellenleiteradern so weit in das Halteteil eingeschoben, bis sie auf der Unterlage aufliegen. Die Lichtwellenleiteradern schließen also bündig mit der entsprechenden Stirnseite des Halteteils ab.

Anschließend wird das Druckteil auf das Halteteil aufgeschoben. Dabei rasten die Nasen 54 des Druckteils in die Einschnitte 42 am Halteteil 30 derart ein, daß das Druckteil und das Halteteil aneinander befestigt sind. Zu diesem Zweck ist das außenliegende Ende jedes Einschnitts geringfügig verengt ausgebildet, beispielsweise mittels eines Rastvorsprungs. Das Einrasten gewährleistet, daß die Lichtwellenleiteradern 7, 9 durch ein Zusammenwirken der Kompressionsflächen und der Druckflächen in der Haltebohrung 32 vorfixiert werden, so daß die gebildete Baugruppe aus dem Halteteil 30 und dem Druckteil 50 bei der weiteren Montage nicht mehr auf dem Lichtwellenleiterkabel verschoben werden kann.

Zur Fixierung des Druckteils an dem Halteteil können auch andere Gestaltungen als der beschriebene Mechanismus aus Einschnitten und Nasen verwendet werden. Es ist beispielsweise denkbar, geriffelte Schrägflächen an dem Druckteil und dem Halteteil vorzusehen, die miteinander verrasten, wenn das Druckteil in das Halteteil gedrückt wird. Bei einer solchen Gestaltung kann aber das Druckteil später, beispielsweise bei einer nachfolgenden Demontage, unter Umständen nicht mehr von dem Halteteil abgezogen werden.

Nachdem das Halteteil 30 und das Druckteil 50 auf die Lichtwellenleiteradern aufgebracht und aneinander befestigt sowie auf den Adern fixiert sind, wird der Grundkörper 10 auf das Halteteil aufgesetzt, wobei die Lichtwellenleiteradern 7, 9 mit den opto-elektronischen Wandlern 24, 26 derart in physischen Kontakt treten, daß in den Lichtwellenleiteradern übertragene Signale in die opto- elektronischen Wandler eingekoppelt werden können, und umgekehrt. Das Einsetzen des Halteteils 30 zusammen mit dem Druckteil 50 in den Grundkörper 10 kann aufgrund der Nut 44 und dem Vorsprung 46 nur in einer einzigen Winkelposition erfolgen, so daß eine eindeutige Zuordnung der verschiedenen Adern 7, 9 zu dem entsprechenden Wandler 24, 26 möglich ist.

Abschließend wird die Überwurfmutter 14 auf den Grundkörper 10 aufgeschraubt, wodurch über die Dichtung 60 ein Druck in axialer Richtung auf das Druckteil 50 und das Halteteil 30 ausgeübt wird. Aufgrund der Kompressionsflächen und der Druckflächen werden die Ansätze 36 im Bereich der Kompressionsflächen 38 in radialer Richtung zusammengedrückt, so daß dort der Querschnitt der Haltebohrungen 32 verringert wird. Auf diese Weise werden die Lichtwellenleiteradern 7, 9 sicher und zuverlässig in den Haltebohrungen 32 festgelegt. Zusätzlich greift die Dichtung 60 zusammen mit dem Gummiring 61 an dem Lichtwellenleiterkabel 5 an, wodurch dort eine Zugentlastung verwirklicht wird.

Aufgrund der Ansätze 36 am Halteteil 30 und der Vertiefungen 56 im Druckteil 50 ergibt sich eine ausgezeichnete Positionierung und Zentrierung des Druckteils 50 relativ zum Halteteil 30. Als Folge davon wird von den Kompressionsflächen 38 eine gleichmäßige Druckkraft auf die Lichtwellenleiteradern 7, 9 ausgeübt, so daß diese sehr schonend im Halteteil 30 festgelegt werden. Gleichzeitig ergibt sich eine sehr gute Abdichtung, und zusammen mit der Dichtung 60 wird insgesamt ein Schutzgrad IP 67 erzielt.

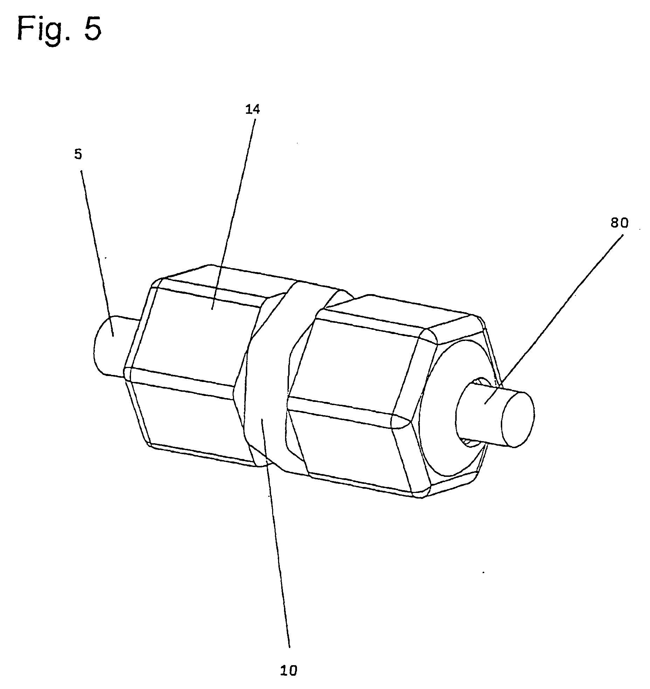

In Figur 5 ist ein Anschlußelement gemäß einer zweiten Ausführungsform der Erfindung gezeigt. Im Unterschied zur ersten Ausführungsform dient dieses Anschlußelement dazu, zwei Lichtwellenleiterkabel miteinander zu koppeln. Anstelle der opto-elektronischen Bauteile 24, 26 können beliebige, aus dem Stand der Technik bekannte Bauteile vorgesehen sein, mittels denen eine optische Kopplung von zwei einander gegenüberliegenden Lichtwellenleiteradern erzielt werden kann. Diese Bauelemente können beispielsweise im Bereich der Wand 22 angeordnet sein. Auf der Seite der Wand, auf der bei der ersten Ausführungsform die Befestigungsmutter 18 angeordnet war, befindet sich bei dem Anschlußelement gemäß der zweiten Ausführungsform ein weiteres Halteteil mit zugehörigem Druckteil, das im Zusammenwirken mit einer zweiten Überwurfmutter ein zweites Lichtwellenleiterkabel, das hier mit dem Bezugszeichen 80 versehen ist, am Grundkörper 10 befestigt.

## Patentansprüche

1. Anschlußelement für ein Lichtwellenleiterkabel (5), das mindestens eine Lichtwellenleiterader (7, 9) enthält, mit einem zylindrischen Grundkörper (10), einem Halteteil (30), das in dem Grundkörper (10) angeordnet ist und mindestens eine Haltebohrung (32) für die Lichtwellenleiterader (7, 9) sowie eine Kompressionsfläche (38) im Bereich eines Endes der Haltebohrung (32) aufweist, einem Druckteil (50), das in dem Grundkörper (10) angeordnet ist und eine Durchgangsbohrung (52), die zur Haltebohrung (32) im Halteteil (30) konzentrisch ist, und eine Druckfläche (58) aufweist, die mit der Kompressionsfläche (38) des Halteteils (30) zusammenwirkt, und mit einem Verschraubungsteil (14), das auf den Grundkörper (10) aufgeschraubt ist und das Druckteil (50) gegen das Halteteil (30) pressen kann, wodurch die Haltebohrung (32) aufgrund des von der Druckfläche (58) auf die Kompressionsfläche (38) ausgeübten Drucks wenigstens im Bereich der Kompressionsfläche (38) verengt wird.

2. Anschlußelement nach Anspruch 1, dadurch gekennzeichnet,
daß das Halteteil (30) und das Druckteil (50) zwei oder mehr Bohrungen (32, 52) aufweisen, die symmetrisch zur Längsachse des Grundkörpers (10) angeordnet sind und sich parallel zueinander und parallel zu dieser erstrecken, wobei das Verschraubungsteil (14) mit einer konzentrisch mit der Längsachse des Grundkörpers (10) angeordneten Eintrittsöffnung (15) für das Lichtwellenleiterkabel (5) versehen ist.

3. Anschlußelement nach einem der Ansprüche 1 und 2, dadurch gekennzeichnet,
daß der Grundkörper (10) eine Wand (22) aufweist, die sich senkrecht zur Längsachse des Grundkörpers (10) erstreckt und mit mindestens einem opto-elektronischen Bauteil (24, 26) versehen ist, das mit der in der Haltebohrung (32) aufgenommenen Lichtwellenleiterader (7, 9) optisch koppelbar ist.

4. Anschlußelement nach Anspruch 3, dadurch gekennzeichnet,
daß die Haltebohrung (32) als Stufenbohrung ausgeführt ist, wobei der dem opto-elektronischen Bauteil (24, 26) zugewandte Abschnitt (34) der Haltebohrung (32) mit einem Durchmesser ausgeführt ist, der größer als der Außendurchmesser des opto-elektronischen Bauteils (24, 26) ist, so daß dieses teilweise in der Haltebohrung (32) aufgenommen ist.

5. Anschlußelement nach einem der Ansprüche 3 und 4, dadurch gekennzeichnet,
daß das elektronische Bauteil ein opto-elektronischer Wandler (24, 26) ist.

6. Anschlußelement nach einem der Ansprüche 1 und 2, dadurch gekennzeichnet,
daß es auf der von dem Verschraubungsteil (14) abgewandten Seite des Grundkörpers (10) eine Baugruppe zum Aufnehmen und Halten eines weiteren Lichtwellenleiterkabels (80) enthält, dessen Lichtwellenleiterader mit der in der Haltebohrung (32) aufgenommenen Lichtwellenleiterader (7, 9) gekoppelt werden kann.

7. Anschlußelement nach einem der vorhergehenden Ansprüche, dadurch gekennzeichnet,
daß das Druckteil (50) mit mindestens einer Nase (54) versehen ist, die in einen in dem Halteteil (30) gebildeten Einschnitt (42) eingreift, so daß das Druckteil (50) gegenüber dem Halteteil (30) drehfest ist.

8. Anschlußelement nach Anspruch 7, dadurch gekennzeichnet,
daß die Nase (54) in dem Einschnitt (42) des Halteteils (30) einrastet, so daß das Druckteil (50) und das Halteteil (30) aneinander befestigt sind.

9. Anschlußelement nach einem der vorhergehenden Ansprüche, dadurch gekennzeichnet,
daß das Halteteil (30) mittels einer Nut (44) und einem in diese eingreifenden Vorsprung (46) in einer eindeutigen Winkelposition relativ zu dem Grundkörper (10) positioniert ist.

10. Anschlußelement nach einem der vorhergehenden Ansprüche, dadurch gekennzeichnet,
daß zwischen dem Verschraubungsteil (14) und dem Druckteil (50) eine Dichtung (60) angeordnet ist, die zwischen dem Lichtwellenleiterkabel (5) und dem Grundkörper (10) abdichtet und eine Kraft von dem Verschraubungsteil (14) auf das Druckteil (50) übertragen kann.

11. Anschlußelement nach einem der vorhergehenden Ansprüche, dadurch gekennzeichnet,
daß die Kompressionsfläche (38) an einem kegelförmigen Ansatz (36) am Halteteil (30) und die Druckfläche (58) am Boden einer Vertiefung (56) im Druckteil (50) ausgebildet ist.

12. Anschlußelement nach einem der vorhergehenden Ansprüche, dadurch gekennzeichnet,
daß der Grundkörper (10) auf seiner Außenseite mit einem Flansch und einem Gewinde (16) versehen ist, auf das eine Befestigungsmutter (18) aufgeschraubt werden kann.

13. Anschlußelement nach einem der vorhergehenden Ansprüche, dadurch gekennzeichnet,
daß es zur Aufnahme mindestens einer elektrischen Ader vorgesehen ist, die zusammen mit der Lichtwellenleiterader in dem Lichtwellenleiterkabel enthalten ist.

14. Verfahren zum Verbinden eines Lichtwellenleiterkabels (5) mit einem Anschlußelement, wobei das Anschlußelement einen zylindrischen Grundkörper (10), ein Halteteil (30), das in dem Grundkörper (10) angeordnet ist und mindestens eine Haltebohrung (32) für die Lichtwellenleiterader (7, 9) sowie eine Kompressionsfläche (38) im Bereich eines Endes der Haltebohrung (32) aufweist, und ein Verschraubungsteil (14) enthält, das auf den Grundkörper (10) aufgeschraubt werden kann, dadurch gekennzeichnet,
daß auf das Lichtwellenleiterkabel ein Druckteil (50) aufgeschoben wird, daß eine Lichtwellenleiterader des Lichtwellenleiterkabels in das Halteteil (30) eingeschoben wird,
daß das Druckteil an dem Halteteil fixiert wird, wodurch die Lichtwellenleiterader in dem Halteteil fixiert wird, daß die von den Druckteil und dem Halteteil gebildete Baugruppe in den Grundkörper (10) eingesetzt wird und
daß schließlich durch Aufschrauben des Verschraubungsteils (14) auf den Grundkörper das Druckteil (50) gegen das Halteteil (30) und dieses wiederum in den Grundkörper (10) gepreßt wird, wodurch das Lichtwellenleiterkabel und die Lichtwellenleiterader fest mit dem Anschlußelement verbunden wird.

15. Verfahren nach Anspruch 14, dadurch gekennzeichnet,
daß das Druckteil (50) an dem Halteteil (30) einrastet, um die Lichtwellenleiterader zu fixieren.

16. Verfahren nach einem der Ansprüche 14 und 15, dadurch gekennzeichnet,
daß die Lichtwellenleiterader bis zu einem Anschlag in das Halteteil (30) eingeschoben wird, bevor das Druckteil (50) an dem Halteteil (30) fixiert wird.

17. Verfahren nach Anspruch 16, dadurch gekennzeichnet,
daß als Anschlag ein beliebiger ebener Gegenstand verwendet wird, auf den das Halteteil (30) mit seiner dem Grundkörper zugewandten Seite aufgelegt wird.
